# EUROPEAN PATENT APPLICATION

(11) **EP 3 832 566 A1**
(43) Date of publication of application: **09.06.2021**
(21) Application number: 19213686.9
(22) Date of filing: 04.12.2019
(51) Int. Cl.: G06Q 10/08, G06F 3/147

(54) **ASSOCIATING PRODUCT TYPES AND ELECTRONIC LABELS USING A CAMERA**

(71) Applicant: Pricer AB, 111 64 Stockholm (SE)
(72) Inventor: Hulth, Nils, 111 64 Stockholm (SE)
(74) Representative: AWA Sweden AB

(57) **Abstract**

A system 300 and a related method 100 for automatically associating an electronic label 320 in a retail environment to a product type 360 is provided. The system comprises a product unit 350 having a product type 360 and an electronic label 320 arranged to present information associated with a product type 360. The system further comprises a camera 310 arranged to capture an image comprising the electronic label and the product unit and a control unit 370 configured to determine an identity of the electronic label, detect the product unit in the image, determine a product type of the product unit, associating the electronic label with the product type, and cause the camera to transmit a control signal. The control signal comprising an identifier of the electronic label and information associated with the product type. The electronic label is configured to receive the control signal, and changing its optical output based on the control signal.

## Description

### Field of the invention

The present disclosure generally relates to associating an electronic label in a retail environment to a product type and more specifically a method and system for automatically associating an electronic label in a retail environment to a product type controlling an optical output of at least one electronic label using a camera.

### Background

Products in a retail store may be arranged at respective product positions along fixtures such as shelves, racks or other displays. In order for labels, that are arranged to present product information, to present the correct information the labels are often associated with a product type. This may be done by manually adding, changing and/or updating the information presented on the label to the relevant information for the actual product. When using electronic labels the labels may be controlled to change their optical output in order for the information to be correct, wherein the change in optical output may be based on a list of electronic labels, their associated products and the information to be presented. The list of electronic labels and the associated products are still often managed manually in order for the list to be up to date.

Updating the labels manually and/or managing the list of labels and their associated products types are often time consuming and often requires interaction with one label at a time. Especially, since product positions for at least some products may be changed quite often it may be difficult to maintain an updated labelling of the actual products positioned on the shelves. Additionally, when installing the labels, each label has to be associated with a product type, creating a large workload to map each label to its respective product type.

Knowledge of the actual product positions may for example save time when products are restocked as persons bringing new items of the products to the fixtures of the store (e.g. from a storage room, a warehouse, or a supply truck) need not search through the fixtures of the store for the correct product positions at which to arrange the new items of the respective products.

The position of an object may generally be determined or estimated using signals transmitted between the object and a number of reference points. Received signal strengths for such signals indicate the distances travelled by the signals, which may be employed to estimate the distances between the object and the reference points.

A method for determining the position of an electronic label is described in the European patent EP3154008B1 which describes a method and system for analyzing an image of a fixture in order to determine the position of an electronic label and associated product(s). The positioning is achieved by using temporal pattern of optical changes of the electronic label.

A retail store may contain a plurality of product types each associated with one or more labels which may significantly affect the time for associating and/or updating product information on the labels negatively.

The above described updating methods may therefore be time consuming, be prone to suffer from human errors and/or require relatively high processing resources when applied in a retail store. Hence, new methods and systems for automatically associating an electronic label to a product type are desirable.

### Summary

It would be advantageous to achieve a method and/or system for associating labels to products and/or updating the shelf labeling of products overcoming, or at least alleviating, the above mentioned drawbacks. In particular, it would be desirable to achieve a method for automatically associating an electronic label in a retail environment to a product type.

To better address one or more of these concerns, a method having the features defined in the independent claim is provided. Preferable embodiments are defined in the dependent claims.

Hence, according to an aspect, a method for automatically associating an electronic label in a retail environment to a product type is provided, wherein the electronic label is arranged to present information associated with the product type, and wherein at least one product unit of the product type and the electronic label are arranged in a field of view of a camera. The method comprises capturing, by the camera, an image comprising the electronic label and the product unit, determining an identity of the electronic label and detecting the product unit in the image. The method may further comprise determining a product type of the product unit, associating the electronic label with the product type and transmitting a control signal from the camera, wherein the control signal comprising an identifier of the electronic label and information associated with the product type. The method may further comprise receiving, by the electronic label, the control signal and changing an optical output of the electronic label based on the control signal.

By associating an electronic label to a product type it may be meant that the electronic label is matched with a product type and that the electronic label may comprise information relevant for the product type. By the electronic label comprises information relevant for the product type, it may be meant that the electronic label may present information relevant for the product type it is associated with. In other words, by associating an electronic label to a product type it may be meant that the electronic label presents information about the product type it is associated with.

By automatically associating an electronic label to a product type it may be meant that at least part of the steps in the method for association of the electronic label to the product type is performed automatically. In other words, associating the electronic label to the product type may comprise steps performed automatically, by for example computer processing and/or image processing.

A retail environment may for example be any environment wherein products or goods, services or similar are offered for selling or rental.

By product unit it may be meant a unit and/or an item. The product unit may be a product unit of a product type. The product unit may be an item and/or unit provided for sale or rental in a retail environment. The product unit may be a sellable unit and/or a sellable item.

By product type it may be meant a group of product units of the same product type. Hence, each product unit of the product type may share the same product type information. Further, by product type it may be meant a stock keeping unit, SKU. Hence, each product unit of the same product type may comprise the same associated features, wherein the associated features may be at least one of price, ordering number, barcode, shelf position, planogram information, manufacturer, description, information associated with the product type, material, size, color, packaging, warranty terms and any other information allowing product units to be of the same product type.

By the electronic label presents information associated with the product type it may be meant that the information, such as price, contents, other information relevant for the product type.

By the electronic label presents information associated with the product type it may be meant that the information relevant for the product type it is associated with, is presented on the electronic label. Further, it may be meant that the optical output of the electronic label is changed in order to draw attention to the associated product type. In other words, by the electronic label presents information associated with the product type it may be meant that the product type may be promoted by a change in optical output of the electronic label.

By the electronic label may be arranged within the field of view of a camera it may be meant that the electronic label may be comprised in the field of view of the camera. The electronic label within the field of view of the camera may be associated with the camera.

By capturing an image, it may here be meant that at least one image is captured. For example, a plurality of images may be captured.

By an identity of the electronic label it may be meant that the electronic label comprises an identifier. By determining the identity of the electronic label it may be meant that the identifier of the electronic label is determined.

By detecting the product unit in the image it may be meant that the product unit is detected in the image by image processing and/or computer processing. By detecting the product unit in the image it may be meant that the product unit is determined based on user interaction. By user interaction it may be meant that the user selects and/or detects the product unit in the image.

By determining a product type of the product unit, it may be meant that the product unit is classified and/or categorized as being one type of product. This may be done by at least one of image processing, computer processing and user interaction.

By a control signal it may be meant a signal comprising commands and/or instructions.

By electronic label it may be meant a label powered electrically, either by battery or an external power source. Further, by an electronic label it may be meant at least one electronic label, for example there may be a plurality of electronic labels arranged in the field of view of the camera.

By an optical output may be meant a visual output and/or an output utilizing a change in visual appearance.

By an optical output of the electronic label may be meant at least a part of the electronic label with the possibility of altering the output and/or appearance. Further, by an optical output it may be meant that the electronic label may comprise at least one of a display, a light emitting device, and any other device suitable for presenting information, generating light and/or generating a visual output. Hence, the output may be a display, light emitting diode (LED) or any other visual device. The display may comprise electronic paper, e-paper, electronic ink., e-ink, LCD, Oled, LCD TFT, electrophoretic or any other display devices capable of change its output electronically.

By change in optical output it may be meant a change in color output, change in intensity of light output, change in presented information, a change in presented text and/or presented image. The optical output may comprise a text, a hash code, an QR code and/or an image.

By changing the optical output of the electronic label based on the control signal it may be meant that optical output of the electronic label is changed when information comprised in the control signal matches information of the electronic label. In other words, the control signal may comprise information regarding the identity of the electronic label. The electronic label may compare the information comprised in the control signal to information comprised in the electronic label. If the comparison shows a matching information of the electronic label to the one comprised in the control signal the method may change the optical output of the electronic label. For example, the control signal may comprise an identifier of the electronic label that may be compared to the identifier of the electronic label. In other words, changing the optical output of the electronic label may be performed when the identifier comprised in the control signal matches an identifier of the electronic label.

Generally, this may facilitate associating an electronic label to a product type. This may also facilitate the control of the electronic label. Additionally, this may further facilitate installation of a system comprising at least one electronic label by automatically associating the electronic labels to product types, and change the optical output of the electronic labels into presenting the correct information. Additionally, the method may provide facilitated installation of a stand-alone system comprising a camera and at least one electronic label, by automatically associating the electronic labels to product types and changing the optical output of the electronic labels.

By capturing an image, comprising the electronic label and determining an identity of the electronic label, a facilitated identification of the electronic label arranged in the field of view of the camera may be provided since the camera may be used in order to determine the identity of the electronic label. This may also provide a facilitated transmission of data associated with the identity of the electronic label from the electronic label to the camera, since the camera may capture at least one image and determine the identity of more than one electronic label simultaneously and/or detect information transmitted from the electronic label based on the captured image.

By determining an identity of the electronic label, a facilitated communication to an unknown electronic label arranged in the vicinity of and/or close to the camera may be provided.

By the electronic label being arranged in the vicinity of and/or close to the camera, it may be meant that the electronic label is arranged in the field of view of the camera and/or at a predetermined distance for a communication signal to reach the electronic label from the camera.

By detecting the product unit in the image, determining a product type of the product unit and associating the electronic label with the product type, a facilitated positioning of product units of a product type associated with the electronic label may be provided since product units of a product type associated with the electronic label may be arranged at a predetermined position relative the electronic label.

By transmitting a control signal from the camera, the control signal comprising an identifier of the electronic label and information associated with the product type, may facilitate communication to an electronic label or a group of electronic labels in an area. This may provide triggering of electronic labels arranged in the predetermined range and/or direction from the camera to for example change its optical output. This may provide facilitated communication to an electronic label arranged in the vicinity of and/or close to the camera. By an electronic label arranged in the vicinity of the camera it may be meant that the electronic label is arranged at a predetermined range and/or direction from the camera in order for a signal transmitted from the camera to reach the electronic label. This predetermined range and/or direction may be an area in the field of view of the camera. However, this may not be limited to the field of view of the camera, i.e. the predetermined range and/or direction may comprise an area outside the field of view of the camera. This may facilitate in transmitting the control signal to a predetermined electronic label associated with the camera.

By receiving, by the electronic label, the control signal, a facilitated updating of the electronic label may be provided. By updating the electronic label, it may be meant updating pricing and/information related to an associated product type. This may also facilitate changing the optical output such that the product type associated with an electronic label draws attention from surrounding potential customers in a retail area, which in turn may facilitate marketing of the product type associated with the electronic label.

By changing an optical output of the electronic label based on the control signal a facilitated update procedure of product information presented on the electronic label may be provided, wherein the product information may for example be pricing, content etc. for the product type. I.e. the electronic label may comprise information associated with the product type. This may also facilitate marketing of a product type associated by the electronic label by changing the optical output of the electronic label drawing attention from a potential customer.

According to an embodiment, the determining an identity of the electronic label may comprise analyzing an optical output of the electronic label in the image, the optical output being indicative of an identifier of the electronic label.

In general, this may further facilitate identification of the electronic label in the image by analyzing the image. By the optical output being indicative of an identifier of the electronic label a facilitated identification of the electronic label may be provided when for example capturing an image of the electronic label. This may facilitate installation and/or changing position of a camera and/or electronic labels since the identification of the electronic labels do not need to be considered when installing or moving the electronic labels and/or camera. In other words, the identity of the electronic labels may be unknown when installing and/or moving at least one of the electronic label and the camera.

According to an embodiment, detecting the product unit in the image may comprise performing image recognition.

By image recognition may be meant that an algorithm for recognizing features in the image may be used.

This may provide an automated process of detecting the product unit in the image. By performing image recognition, this may provide that manual work for identifying the product unit in the image may not be needed. Hence, this may provide a time efficient procedure of identifying the product unit in the image compared to that of a manual procedure.

According to an embodiment, determining a product type of the product unit may be based on a predetermined set of product types.

By a predetermined set of product types it may be meant that the product unit may be at least one product type of a set of product types listed. Hence, the product type of the product unit may be a product type of a predetermined set of product types. The predetermined product types may comprise a list of predetermined product types. The predetermined product types may be product types expected to be arranged in at least part of a retail area.

By based on it may be meant that the determination may be made by comparing image data with data significant for a predetermined set of product types.

By image data it may be meant at least one of the image and data associated with the image such as data comprising image transformation of the image.

By data significant for a predetermined set of product types it may be meant data comprising at least one of an image comprising the product type and data associated with the image comprising the product type such as data with image transformation of the image comprising the product type.

By determining a product type of the product unit based on a predetermined set of product types a facilitated image recognition and/or less demanding computer processing may be provided.

According to an embodiment, the method may further comprise determining a position of the product unit in the image and determining a position of the electronic label in the image. Wherein associating the electronic label with the product type may be based on the determined positions.

By the determined positions it may be meant the determined position of the electronic label and the determined position of the product unit. Hence, by the determined positions it may also be meant the determined relative positions of the product unit and the electronic label.

By based on the determined positions it may be meant that the determined positions may be used to associate the electronic label to the product type by comparing the positions. When comparing the determined position of the electronic label to the determined position of the product unit, the relative positions may be compared and there may be a predetermined relative position of the product units relative the electronic label further facilitating the association.

By determining a position of the product unit in the image a facilitated association of the electronic label with the product unit may be provided.

By determining a position of the electronic label in the image and/or by determining a position of the product type and the electronic label a facilitated association with the product type and the electronic label may be provided.

This may facilitate the installation of the electronic labels and the camera, since an automated association of the electronic label to a product type may be provided.

According to an embodiment, the method may further comprise receiving, by the camera, information associated with the product type.

By information associated with the product type it may be meant information comprising data about the product type. Further, by information associated with the product type, it may be meant information comprising data associated with the product units of the product type, wherein data may comprise at least one of the product type, a reference, a name, a price information and any other information relevant to the product unit and/or product type.

By receiving, by the camera, information associated with the product type a facilitated a communication with the electronic label may be provided since the communication may be handled locally, i.e. communication with for example a server may be avoided. This may provide the reception of data, by the camera, from the electronic label.

According to an embodiment, the information associated with the product type may comprise at least one of a product type, a product type name, a product type price information and a product type information.

By product type information it may be meant any information relevant for the product type. For example, product type information may comprise information about the product type such as at least one of contents of the product type, origin of the product type, pricing of the product type, manufacturer of the product type, brand of the product type, and any other information relevant for the product type.

This may provide facilitated collection of price information, product type name and/or product type information.

According to an embodiment, the method may further comprise storing the association between the product type and the electronic label.

This may provide the possibility of reusing the link and/or known association between the product type and the electronic label. Hence, associating the electronic label to the product type may use prior association between product type and electronic label after, for example, having moved, removed and/or replaced the camera.

According to an embodiment, the method may further comprise determining a position of the product unit in the image, determining an area associated with the product type of the product unit based on the determined position of the product unit and storing the area associated with the product type.

By an area associated with the product type it may be meant an area in the image comprising the product unit. The product unit may be arranged at a predetermined position relative the electronic label and the area associated with the product type may comprise at least one predetermined position for the product unit relative the electronic label. The area may be determined based on a predetermined area relative the detected product unit.

This may provide facilitated control of when to restock products, i.e. add product units to for example a shelf, since the area comprising the product type may be determined and the area may be used to determine the number of product units of the product type that is left in the area comprising the product type, on for example the shelf. This may also provide for facilitated control of product unit misplacement since the detected product units within the area may be compared to the product type. For example, the product units may be compared to the product type being expected to be present in the determined area.

According to an embodiment, the method may further comprise detecting, by the camera, a second camera in the field of view of said camera based on at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

By detecting it may be meant that the second camera is detected in the image by the camera detecting an identifier associated by the second camera in the image. The identifier may be for example be at least one of a predetermined QR code displayed on the camera, a predetermined optical output of the second camera, a predetermined change in optical output of the second camera and any identifier that may provide identifying the second camera in the image.

This may facilitate determining a position of the electronic label relative other electronic labels. For instance, more than one camera may be used each camera having at least one electronic label arranged in the field of view. Wherein the second camera is arranged in the field of view of a first camera and by determining the relative position between the second camera and the first camera the relative position of electronic labels arranged in the field of view of the first and second camera, respectively may be determined.

According to an embodiment, the method may further comprise verifying the change in optical output using the camera.

By verifying the change in optical output using the camera it may be meant that the camera may capture at least one image and by analyzing the at least one image the optical output may be verified by comparing the optical output to a predetermined optical output. The optical output may comprise a change in optical output, a text, a hash code, an QR code and/or an image and hence verifying the change in optical output may comprise analyzing the change in optical output, text, the hash code, the QR code and/or the image of the electronic label in the captured image. As a non-limiting example, the electronic label may change its optical output in a predetermined way verifying that the optical output of the electronic label is changed based on the received control signal. The optical output may for example comprise a price information and/or any other information associated with the product type, and hence, verifying the change in optical output may comprise analyzing the price information and/or any other information associated with the product type in the captured image.

By verifying the change in optical output using the camera may provide a facilitated verification of the optical output of the electronic label. This may also facilitate identifying faulty electronic labels being unresponsive of the control signal transmitted. By using the camera, the verification of optical output may also be facilitated since information from several electronic labels may be acquired simultaneously from at least one image which may save time, power and/or processing resources needed.

According to an embodiment, the method may further comprise the steps of receiving, by a server, the control signal transmitted from the camera and transmitting, by the server, the control signal.

The server may be a local server and/or a cloud server. In other words, the server may be a physical server and/or a virtual server. The server may comprise a database.

This may provide for lowered power consumption in the camera. I.e. this may provide saving battery power on the camera by using the server to transmit the control signal. There may be at least one camera. By transmitting the control signal by the server, this may further facilitate coordination of the at least one camera and the change in optical output and/or update of the plurality of electronic labels within the retail environment. In other words, this may further facilitate updating the electronic label coordinating the at least one camera.

According to an embodiment, the method may further comprise detecting a display device associated with an electronic label by analyzing the image.

By a display device it may be meant a device comprising information associated with the product unit and/or product type. The display device may be a shelf talker.

This may provide for additional information presented by the display device to be detected. The detected information presented by at least one of the electronic label and display device may be stored in at least one of a database and the storage device together with the associated product type. Hence, this may provide for additional information presented by the display device to also be stored in the database and/or storage device.

According to a second aspect of the present invention a system for automatically associating an electronic label in a retail environment to a product type is provided. The system may comprise a product unit having a product type and an electronic label arranged to present information associated with a product type. The system may further comprise a camera arranged to capture an image comprising the electronic label and the product unit. The system may further comprise a control unit configured to determine an identity of the electronic label, detect the product unit in the image, determine a product type of the product unit, associating the electronic label with the product type and cause the camera to transmit a control signal. The control signal may comprise an identifier of the electronic label and information associated with the product type. The electronic label may be configured to receive the control signal and changing its optical output based on the control signal.

By the camera being arranged to capture an image comprising the electronic label and the product unit it may mean that the electronic label and the product unit are arranged in the field of view of the camera.

By the electronic label being configured to receive the control signal it may mean that the electronic label comprises at least one of a receiver and a transceiver.

By a control unit it may be meant at least one of a control unit within the camera and outside the camera. In other words, the control unit may be arranged as a separate unit and/or arranged within the camera.

Generally, this may facilitate associating an electronic label to a product type. This may also provide a facilitated control of the electronic label. Additionally, this may further facilitate installation of a system comprising at least one electronic label by automatically associating the electronic labels to product types, and change the optical output of the electronic labels into presenting the correct information. Additionally, the method may provide facilitated installation of a stand-alone system comprising a camera and at least one electronic label, by automatically associating the electronic labels to product types and changing the optical output of the electronic labels. Generally, this may also provide initiating less electronic labels to change its optical output compared to transmitting a control signal targeting several electronic labels. Consequently, this may provide a reduced power consumption since less electronic labels may be triggered to change its optical output.

By the electronic label may be configured to receive the control signal it may be meant that the electronic label is arranged to receive at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal. By being configured to receive the control signal it may be meant that the electronic label is arranged to receive a wireless signal. Hence, the wireless signal may comprise at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

The camera may provide for facilitated communication with the electronic label. The camera may facilitate the transmitting of control signal to the electronic label. The camera may also facilitate verifying the output of the electronic label.

By the camera being arranged to capture an image comprising the electronic label may provide for facilitated identification of the electronic label.

According to an embodiment, the camera may be a mobile device.

By a mobile device it may be meant a movable device and/or portable device. Further, by a mobile device it may here be meant a device being mobile, movable and/or portable and could comprise at least one of a movable robot, part of a robot such as a moving arm of a stationary or movable robot, a drone, cellular device, smart phone, pad, tablet, computer, portable computer and any device suitable to carry a camera and being mobile and/or movable. The drone may be a flying drone configured to be autonomously controlled and/or user controlled.

This may result in that fewer cameras are needed in order to capture images of a plurality electronic labels arranged throughout for example a retail environment compared to using stationary cameras, as the camera may be moved to the area in which it is needed.

According to an embodiment, the camera may be arranged on at least one of a shelf, a ceiling and a wall.

This may provide for facilitated capturing of images comprising the electronic labels and the product units.

It is noted that embodiments of the invention relate to all possible combinations of features recited in the claims. Further, it will be appreciated that the various embodiments described for the method are all combinable with the device as defined in accordance with the second aspect of the present invention.

### Brief description of the drawings

This and other aspects will now be described in more detail in the following illustrative and non-limiting detailed description of embodiments, with reference to the appended drawings.
Figure 1 schematically illustrates a perspective view of the system according to an embodiment.
Figures 2 schematically illustrates a perspective view of the system according to an embodiment.
Figure 3 schematically illustrates a perspective view of the system according to an embodiment.

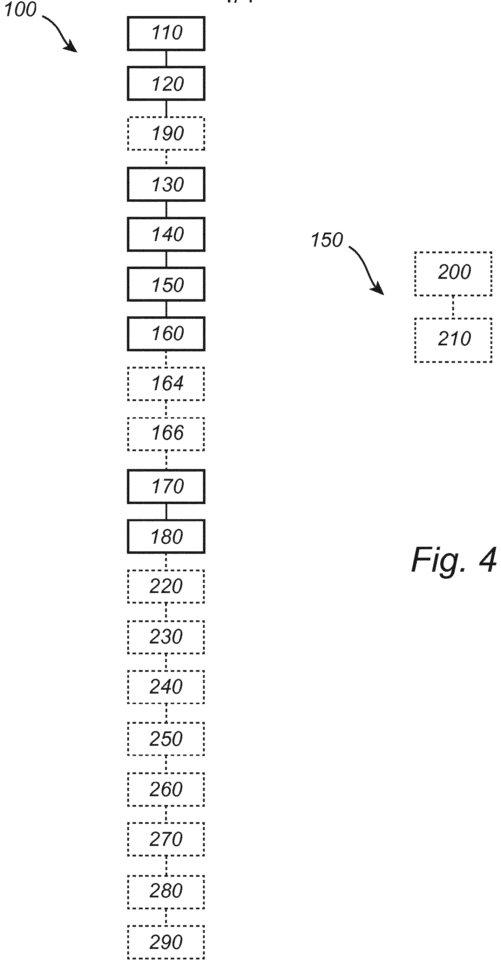

Figure 4 schematically illustrates a flow chart of the method according to an embodiment.

All the figures are schematic, not necessarily to scale, and generally only show parts which are necessary in order to elucidate the embodiments, wherein other parts may be omitted. Like reference numerals refer to like elements throughout the description.

### Detailed description

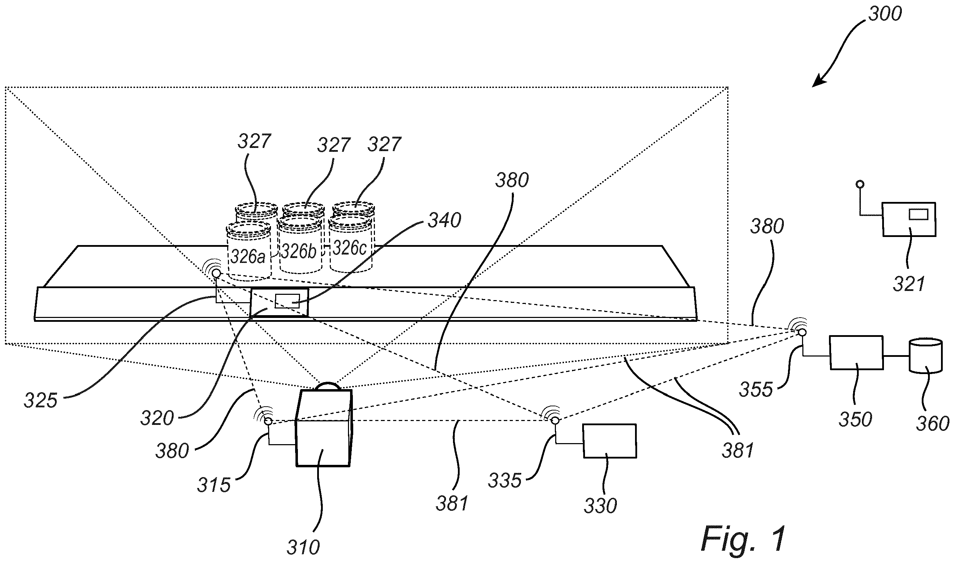

Figure 1 illustrate system 300 for automatically associating an electronic label 320 in a retail environment to a product type according to an embodiment.

The system 300 may comprise a camera 310. The camera 310 may be arranged to capture at least one image of the electronic label 320 and at least one product unit 326a-c. The electronic label 320 may be associated with a product type 327 of one or more of the at least one product unit 326a-c. The camera may be arranged to transmit a control signal 380, 381. The camera 310 may comprise a transceiver 315 for transmitting and/or receiving communication such as a command or a control signal 380, 381. The camera 310 may also comprise separate means for receiving and transmitting a signal. The transceiver 315 may be arranged to transmit and/or receive at least one of a Radio Frequency, RF, signal, a wireless, WIFI, signal, an Infrared, IR, signal, a Bluetooth, BT, signal, a Near-Field communication, NFC, signal, a Radio Frequency identification, RFID, signal, an optical signal, a sound signal or any signal suitable for communication.

The electronic label 320 may be arranged at a predetermined range and direction relative the product unit 326a-c. The electronic label 320 may comprise information about the product type 327 it may be associated with, in other words the electronic label may be matched with the product type it may be associated with.

The electronic label 320 may be adapted to receive the control signal 380 and may be adapted to change its optical output in response to said control signal 380. The electronic label 320 may be arranged in the field of view of the camera 310. There may be a plurality of electronic labels 320 present. Hence, at least one electronic label 320 may be present. The at least one electronic label 320 may comprise an optical output device 340. The optical output device 340 may comprise at least one of a LED, a display and any other visual device. The at least one electronic label 320 may comprise a transceiver 325. The transceiver 325 may be arranged to receive at least one of a Radio Frequency, RF, signal, a wireless, WIFI, signal, an Infrared, IR, signal, a Bluetooth, BT, signal, a Near-Field communication, NFC, signal, a Radio Frequency identification, RFID, signal, an optical signal, a sound signal or any signal suitable for communication.

The system may further comprise a control unit 330. The control unit 330 may be adapted to communicate with the camera 310 and configured to detect an identifier of the electronic label 320 by analyzing the optical output in the image and configured to determine a position of the electronic label 320 based on the position of the electronic label 320 in the image.

The control unit 330 may be arranged separately from the camera 310 or arranged within the camera 310. In other words, the camera 310 may comprise the control unit 330.

The control unit 330 may communicate with the camera by at least one of Radio Frequency, RF, signal, a wireless, WIFI, signal, an Infrared, IR, signal, a Bluetooth, BT, signal, a Near-Field communication, NFC, signal, a Radio Frequency identification, RFID, signal, an optical signal, a sound signal or any signal suitable for communication. The control unit 330 may comprise a transceiver 335. The control unit 330 may, by the transceiver 335, send a control signal 380, 381 arranged to be received by at least one of the server 350, the camera 310 and the electronic label 320, wherein the control signal 380, 381 may control at least one of the camera 310, the server 350 and the electronic label 320.

The system may further comprise a server 350 and a storage means 360. The server 350 may be communicatively connected to the storage means 360. The server 350 may further comprise a transceiver 355. The server 350 may, by the transceiver 355, send a control signal 380,381 arranged to be received by at least one of the camera 310, the control unit 330 and the electronic label 320, wherein the control signal 380, 381 may control at least one of the camera 310, the server 350 and the electronic label 320.

The server 350 may be configured to receive the control signal 381 transmitted from the camera 310. The server 350 may further be configured to transmit the control signal 380,381.

The electronic label 320 may be arranged to receive the control signal 380 transmitted from the server 350.

The camera 310 may, by the transceiver 315, transmit a signal arranged to be received by the at least one of the control unit 330, the electronic label 320 and the server 350. The signal transmitted from the camera 310 may comprise at least one of a control signal, an image, a determined position, a determined identifier, information associated with the product type 327 and any data relating to the electronic label 320. The control signal may comprise an identifier of the electronic label 320 and information associated with the product type 327. The information associated with the product type may comprise at least one of a product type 327, a product type name, an product type price information and a product type information. The transceiver 315 may have a limited range and the at least one electronic label 320 arranged within the limited range may receive the control signal. Electronic labels being out of range may not receive the control signal and hence, may not change its optical output. The camera 310 may be arranged to detect a display device associated with an electronic label by analyzing the image. The display device may be a device comprising information associated with the product unit and/or product type such as a shelf talker.

The camera 310 may be powered by at least one of a battery and an external power source. The camera 310 may be arranged on or in at least one of a shelf, a ceiling, a wall and any other suitable position to capture images of the at least one electronic label 320. The camera 310 may also be mobile, i.e. the camera may be movable. The camera 310 may be comprised in a mobile device. In other words, the camera may be comprised in a movable device. The mobile device may comprise at least one of a movable robot, part of a robot such as a moving arm of a stationary or movable robot, a drone, cellular device and any device suitable to carry a camera and being mobile and/or movable. The drone may be a flying drone configured to be autonomously controlled and/or user controlled.

At least one of the camera 310, the server 350 and the control unit 330 may be arranged to analyze an optical output of the electronic label in the image wherein the optical output is indicative of an identifier of the electronic label in order to determine an identity of the electronic label.

The camera 310 may determine the identity of the electronic label 320 in the image. The electronic label may be identified by at least one of the optical output of the electronic label 320, a QR code, a bar code and any feature that could identify the electronic label in the image. By the electronic label being identified by the optical output of the electronic label 320 it may be meant that the optical output comprises a text, an QR code, an image or similar that may be detected by the camera 310. By the electronic label 320 being identified by the optical output of the electronic label 320 it may be meant that optical output of the electronic label 320 is changed. The change in optical output may be a characteristic change in optical output that may be associated with an identity and/or an identifier of the electronic label. In other words, in order for the camera 310 to capture an image comprising the identifier the electronic label 320 is controlled to change its optical output, wherein the change in optical output may be a characteristic change in optical output that may be associated with an identifier of the electronic label.

The identifier may comprise at least one of a numeric code, a hexadecimal code, a binary code and any other means suitable for distinguishing or identifying the electronic label 320.

The identifier may be a global identifier or a local identifier. By global identifier it may be meant an identifier globally unique for each electronic label 320. Each electronic label 320 produced may have a unique global identifier in order to be able to distinguish an electronic label globally. This may require the allocated space for the identifier to be relatively large in comparison to the local identifier. By local identifier is meant that each electronic label may have a unique identifier locally, i.e. each electronic label 320 may be identified among a number of electronic labels arranged locally. The allocated space for the local identifier may be less in order for storing the local identifier compared to storing a global identifier. Hence, the local identifier may require less storage space. Subsequently, in order to communicate the identity of the electronic labels 320 less data may be transmitted when transmitting the local identifier and in turn this may save bandwidth and/or time while transmitting the identity of the electronic label. The local identifier may be a subset of the global identifier.

The change in optical output may be triggered by the camera 310 transmitting a control signal 380 directly to be received by the electronic label 320 and/or the change in optical output may be triggered by the camera 310 transmitting a control signal 380, 381 to be received by the electronic label 320 via at least one of the server 350 and the control unit 330 initiating.

At least one of the camera 310, the control unit 330 and the server 350 may be arranged to transmit the control signal 380, 381. The at least one of the camera 310, the control unit 330 and the server 350 may transmit the control signal 380, 381 without prior knowledge of the recipient, in other words the at least one of the camera 310, the control unit 330 and the server 350 may broadcast the control signal 380, 381. The at least one of the camera 310, the control unit 330 and the server 350 may transmit at least one of a radio signal, a WIFI signal, a BT signal, a NFC signal, a RFID signal, an optical signal, a sound signal or any signal suitable for communication.

At least one of the camera 310, the control unit 330 and the server 350 may further be configured to detect the product unit 326a-c in the image and determine a product type 327 of the product unit 326a-c. By analyzing the image, the product unit 326a-c may be detected and determined. At least one of the camera 310, the control unit 330 and the server 350 may further be arranged to associate the electronic label 320 with the product type 327. Detecting the product unit in the image may comprise image recognition, hence, at least one of the camera 310, the control unit 330 and the server 350 may be configured to perform image recognition in order to detect the product unit in the image. Image recognition may be used in combination with user interaction. Hence, detecting the product unit in the image may comprise image recognition and user interaction. This may be achieved by a first detection of product units in the image by image recognition, wherein the first detection may output a probability of the product unit to belong a product type. The output may comprise several probabilities when for example product units have a similar appearance. Hence, the first detection of product units in the image may output different probabilities for the detected product unit to belong different product types, wherein one probability may be determined for each product type. A second detection may subsequently be done by user interaction based on the probability of the product unit to belong to different product types. The second detection may be performed only when the probability is below a certain predetermined threshold in the first detection and/or when there is a number of product types above a certain threshold of which the detected product unit is determined to belong to. This may further facilitate the detection of product types by user interaction by a second step of user interaction to verify the image recognition when the image recognition outputs a less definite result.

In order to determine the product type the system may use a predetermined set of product types to compare the detected product unit with. The predetermined set of product types may be the set of product types known to be arranged in the retail environment. The predetermined set of product types may be a known set of product types 327 located in part of the retail environment where the camera 310 is located.

The transceiver 325 may be arranged to receive the control signal transmitted from at least one of the camera 310, the control unit 330 and the server 350. In response to reception of the control signal the electronic label 320 may be arranged to change its optical output. In other words, the electronic label 320 may be adapted to receive the control signal 380 and may be adapted to change its optical output in response to said control signal 380.

The electronic label 320 may be arranged change its optical output based on the control signal 380. In other words, the electronic label 320 may be controlled to change its optical output based on the control signal 380. The change in optical output may be a change in presented information. I.e. the change in optical output may be an update of information associated with the product type 327 comprised in the electronic label 320. Hence, the electronic label 320 may update the presented information associated with the product type 327 based on the control signal 380.

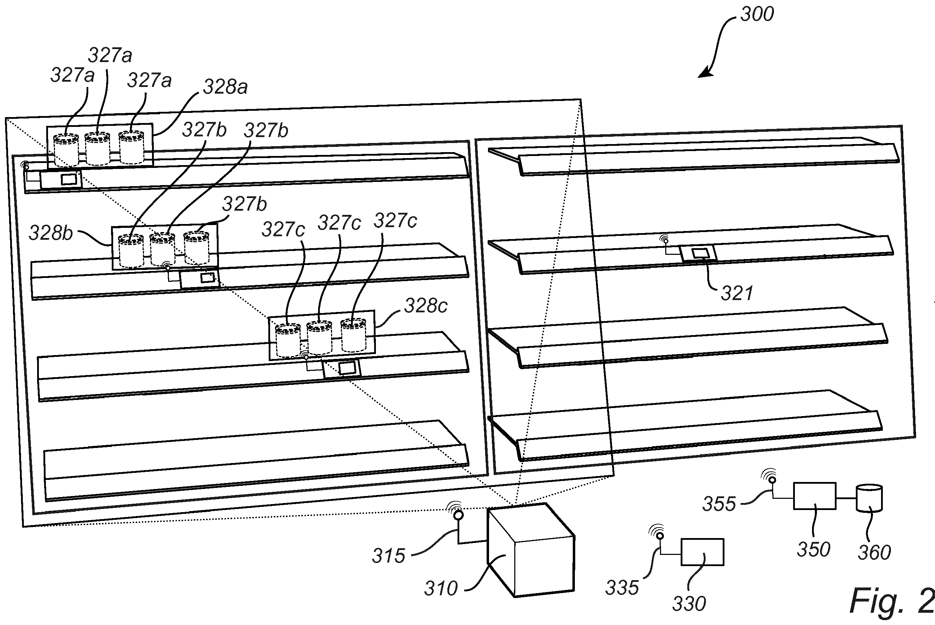

Figure 2 schematically illustrates the system 300 similar to that of the system 300 in Figure 1, except that in Figure 2 a plurality of electronic labels 320a - 320c are arranged within the field of view of the camera 310. Same features discussed to the electronic label 320 in Figure 1 applies to the plurality of electronic labels 320a - 320g in Figure 2. The control unit 330 and the server 350 illustrated in Figure 2 has the similar functionality as the control unit 330 and server 350 in Figure 1.

At least one of the camera 310, the control unit 330 and the server 350 may further be configured to determine a position of the product unit and a position of the electronic label 320 in the image. Based on the determined positions, the electronic label may be associated with the product type. Hence, by determining the position of the product unit and by determining the type of product unit, i.e. determining the product type, the position for the product type may indirectly be determined. The electronic label may comprise information about the product type it is associated with, in other words the electronic label is matched with the product type is associated with. The product unit may be arranged at a predetermined location relative the electronic label in the image. In other words, the electronic label may be arranged at a preferred predetermined range and direction relative the product unit. For example, in Figure 2, the product units of product type 327a are arranged to the right of the electronic label 320a associated with the product type 327a. In another example as shown in Figure 2, the product units of product type 327b are arranged to the left of the electronic label 320b associated with the product type 327b. In a third example also shown in Figure 2, the product units of product type 327c are arranged such that the electronic label 320c associated with the product type 327c is centered with respect to the product units 327c. Hence, the electronic label 320a-c may be arranged at a predetermined location relative to the product units identified. The system may also calculate a probability of the detected electronic label 320a-c to be associated with the product units and/or product types detected based on the determined position of the product unit in the image and the determined position of the electronic label 320a - 320c in the image. Based on the probability the system may associate the electronic label with the product type.

As previously discussed, the system 300 may be configured to determine a position of the product unit in the image. The system 300 may be configured to determine the product type 327a-c of the detected product units. The system 300 may further be configured to determine an area 328a-c associated with the product type 327a-c. The area 328a-c associated with the product type 327a-c may enclose the product units of the product types 327a-c. The system may store the area 328a-c associated with the product type. The system may analyze the captured image and determine if there are product units of the product types 327a-c missing by comparing to earlier data. Hence, this may provide the possibility of determining when restocking of product units is needed.

The camera 310 may be configured to receive information associated with the product type. The information associated with the product type may comprise at least one of a product type, a product type name, a product type price information and a product type information. In other words, the camera may be configured to receive at least one of a product type, a product type name, a product type price information and a product type information. The information associated with the product type may be received by the camera by a transmitted signal from the electronic label 320a - 320c. In other words, the electronic label 320a - 320c may transmit a signal by the transceiver 325 and the signal may be received by the transceiver 315. The information associated with the product type may be received by the camera 310 by capturing an image of the electronic label 320a - 320c wherein the image may comprise information associated with the product type. In other words, the camera 310 may receive the information associated with the product type based on the optical output of the electronic label. For example, the image may comprise the electronic label 320a - 320c and the electronic label 320a - 320c may display, or present, the information associated with the electronic label. In another example, the electronic label 320a - 320c may change its optical output such that the change in optical output is detected by the camera 310. The change in optical output may comprise the information associated with the product type and the information associated with the product type may be interpreted by the camera 310 based on detecting the change in optical output. In other words, the change in optical output may be interpreted by the camera 310 such that the information associated with the product type is detected by the camera 310.

At least one of the camera 310, the control unit 330, the server 350 and the storage device 360 may further be configured to store the association between the product type 327a - 327c and the electronic label 320a - 320c.

The system 300 may further comprise a first and a second camera, the second camera may be within the field of view of the first camera, and the first camera may be configured to detect the second camera by analyzing the image. In other words, a second camera 370 may be arranged in the field of view of the camera 310. The first and/or second camera may comprise a visual identifier. The system 300 may be configured to detect the second camera 370 by analyzing the image captured by the camera 310. The first and/or second camera may comprise an optical output and be arranged to change its optical output in response to a control signal. The change in optical output may comprise at least one of a distinct temporal pattern of optical changes, displaying a visual reference, such as at least one of a barcode, a QR code, a number, a letter and the combination thereof or changing a color output of the optical output of the first and/or second camera. The system 300 may be configured to detect the second camera 370 based on at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

The first and/or second camera may comprise a unique identifier, wherein the identifier may be a local and/or a global identifier. The change in optical output may be associated with this identifier.

This may facilitate determining the position of at least one of said first and second camera since a position of one of said first and second camera may be known, and this may further facilitate the determination of position of the other camera. For example, if the position of the second camera is known, a facilitated positioning of the first camera may be achieved by detecting the second camera. Optionally or alternatively, the position of the first camera may be known and hence, determining the position of the second camera may be facilitated by detecting the second camera in an image captured by the first camera.

The system 300 may further be configured to verify the change in optical output using the camera 310. In other words, the system 300 may be configured to analyze the captured image and based on the analyze of the captured image the system 300 may verify the change in optical output of the electronic label.

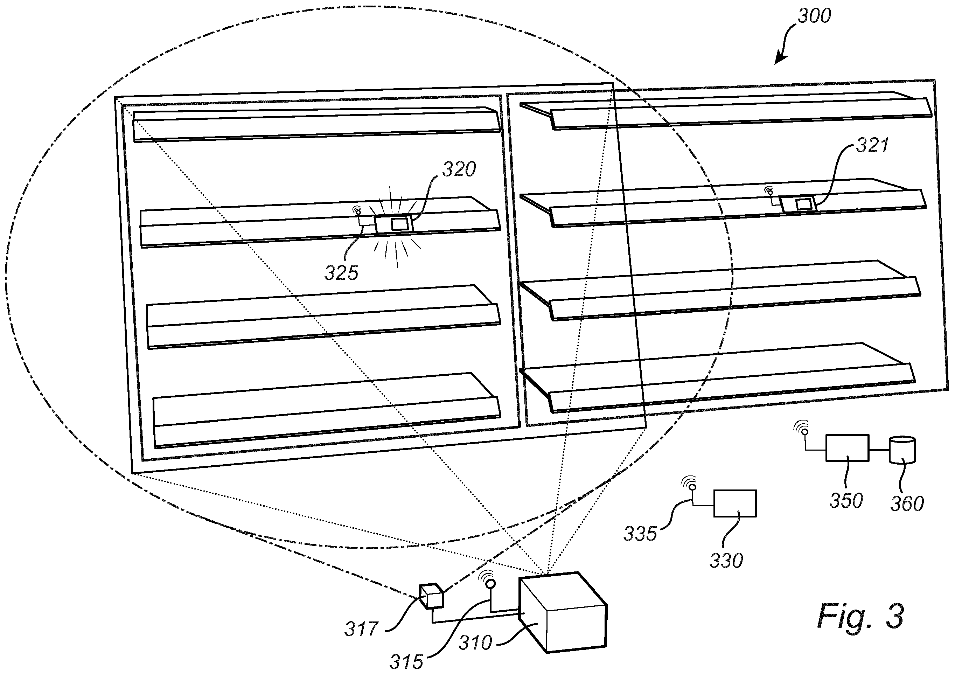

Figure 3 schematically illustrates a perspective view of the system 300 similar to that of the system 300 in Figure 1 and 2, except that in Figure 3 the transceiver 315 may comprise an optical transmitter 317. Figure 3 illustrates a camera 310 and an electronic label 320 arranged within the field of view of the camera 310. The optical transmitter 317 may comprise a LED, the LED may be arranged to emit at least one of visible light, UV-light or IR-light.

The camera 310 may transmit the control signal using at least one of the transceiver 315 and the optical transmitter 317. As previously discussed, the transceiver 315 may have a limited range and only the at least one electronic label 320 arranged within the limited range may receive the control signal. Electronic labels being out of range may not receive the control signal and hence, may not have its optical output changed.

Analogously, the optical transmitter 317 may have a limited range. The control signal transmitted from the optical transmitter 317 may be directed. This may further facilitate limiting the electronic labels 320 to be controlled to have their optical output changed. In other words, the optical transmitter 317 may be directed to an area, wherein electronic labels 320 within that area may be controlled to have their optical output changed. More specifically, the optical transmitter 317 may be pointing in a direction creating a cone of illuminance transmitted from the optical transmitter, wherein the cone of illuminance comprises the control signal and wherein electronic labels 320 arranged within that cone of illuminance may be controlled to have their optical output changed.

This is illustrated in Figure 3, the optical transmitter 317 is transmitting an optical signal, wherein the optical signal may be the cone of illuminance. The optical signal may comprise the control signal. The optical signal may comprise electromagnetic radiation in wavelengths corresponding to wavelengths for at least one of UV, visible or IR radiation. The optical signal may have a limited range in the direction of the light propagation. The optical signal may have a limited area and/or volume being illuminated, as previously described. This may result in a projected area of illuminance in a plane comprising the at least one electronic label 320, in Figure 3 this plane may be the shelf and/or shelves comprising the at least one electronic label 320. Product units arranged outside this projected area of illuminance, such as the electronic label 321 will not receive the transmitted optical signal. Hence, the electronic label 321 will not be controlled to have its optical output changed. The optical transmitter 317 may be arranged so that the electronic labels 320 being controlled to have their optical output changed matches the electronic labels 320 within the field of view of the camera 310. The optical transmitter 317 and the camera 310 may be arranged to that the camera 310 captures at least one image of a portion of the electronic labels 320 illuminated by the optical transmitter. This is schematically illustrated in Figure 3, as the cone of illuminance from the optical transmitter is larger than the area imaged by the camera 310 in a plane comprising the electronic labels 320.

The cone of illuminance from the optical transmitter may further facilitate directing the control signal and hence this may further facilitate limiting the number of electronic labels receiving the control signal. In turn, this may further facilitate saving power when associating an electronic label 320 to a product type 370, communicating with the electronic label 320 and/or controlling the optical output of the electronic label 320.

The optical transmitter 317 in Figure 3 is arranged on the camera 310. However, the optical transmitter 317 is not limited to be arranged on the camera 310, but can also be arranged as a separate unit next to the camera 310 or on anyone of the server 350 and the control unit 330 and may be controlled by the camera 310 through a control signal 381. The camera 310 may transmit a control signal 380 directly to be received by the electronic label 320 and/or the camera 310 may transmit a control signal 380, 381 to the electronic label 320 via at least one of the server 350 and the control unit 330.

As illustrated in Figure 3, the optical transmitter transmits a signal, wherein the signal comprises the control signal. However, the idea of limiting the number of electronic labels 320 to be controlled to have their optical output changed as illustrated in Figure 3, is not limited to an optical signal. The signal that may comprise the control signal could be any signal with limitation in range and/or direction know in the art of communication.

A method 100 for automatically associating an electronic label in a retail environment to a product type, wherein the electronic label is arranged to present information associated with the product type, and wherein a product unit of the product type and the electronic label are arranged in a field of view of a camera, the method comprising capturing 110, by the camera, an image comprising the electronic label and the product unit. The method may further comprise determining 120 an identity of the electronic label. In the step of capturing 110 the method may comprise capturing a plurality of images comprising the electronic label and the product unit in order to determine time dependent changes. By time dependent changes it may be meant changes in the plurality of images over time. The method may determine a pattern of optical changes in the images.

The method may further comprise detecting 130 the product unit in the image and determining 140 a product type of the product unit. The method may further comprise associating 150 the electronic label with the product type and transmitting 160 a control signal from the camera, the control signal comprising an identifier of the electronic label and information associated with the product type. The step of transmitting 160 may comprise transmitting a control signal from the camera may comprise transmitting at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal. The control signal transmitted may be a wireless signal, hence, for example, the optical signal may be a wireless optical signal. Transmitting a control signal from the camera may provide triggering electronic labels arranged in a predetermined range and/or direction from the camera, in this way, the control signal may be limited to the targeted electronic labels arranged in a predetermined range from the camera. Consequently, this may provide that electronic labels arranged in the field of view of the camera to receive the transmitted control signal. This, since there may be a reduced amount of electronic labels reached by the control signal transmitted compared to a system where all electronic labels are controlled to change their optical output or have their positions determined at the same time. The step of transmitting 160 may comprise transmitting the control signal in a direction, further limiting the amount of electronic labels being reached by the control signal. This may provide less power consumption since the electronic labels arranged outside the range of the control signal may not need to receive the control signal and evaluate the signal and determine if the control signal contains information meant for that particular electronic label.

The method may comprise the steps of receiving 164, by a server, the control signal transmitted from the camera and transmitting 166, by the server, the control signal. The method may further comprise receiving 170, by the electronic label, the control signal. Hence, the control signal may be directly or indirectly be received by the electronic label after it being transmitted from the camera. The method may further comprise changing (180) an optical output of the electronic label based on the control signal.

The step of determining an identity 120 of the electronic label may further comprise analyzing 190 an optical output of the electronic label in the image, the optical output being indicative of an identifier of the electronic label.

The step of detecting 130 the product unit in the image may comprise performing image recognition. The image recognition may comprise comparing the detected product unit with a predetermined set of product types. The predetermined set of product types may be the set of product types known to be arranged in the retail environment. The predetermined set of product types may be a list of predetermined set of product types. The predetermined set of product types may be a known set of product types located in part of the retail environment where the camera may be located.

The step of determining 140 a product type of the product unit may be based on a predetermined set of product types.

The method may further comprise determining 200 a position of the product unit in the image and determining 210 a position of the electronic label in the image. The step of associating 150 the electronic label with the product type according to the method may be based on the determined positions. In other words, the step of associating 150 a position of the electronic label in the image may be based on the steps of determining 200 a position of the product unit in the image and determining 210 a position of the electronic label in the image.

The method may further comprise receiving 220, by the camera, information associated with the product type. The information associated with the product type may comprise at least one of a product type, a product type name, a product type price information and a product type information.

The method may further comprise storing 230 the association between the product type and the electronic label. The storing may be made by at least one of the camera, a server, a storage means and a control unit. Hence, the step of storing the association between the product type and the electronic label may be performed by at least one of the camera, a server, a storage means and a control unit. By storing the association by the camera a local storage may be provided, in turn providing less power consumption since the association between the product type and the electronic label may not need to be transmitted for storing elsewhere.

The method may further comprise determining 240 a position of the product unit in the image and determining 250 an area associated with the product type of the product unit based on the determined position of the product unit. The method may further comprise storing 260 the area associated with the product type.

The method may further comprise detecting 270, by the camera, a second camera in the field of view of said camera based on at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal. Hence, the second camera in the field of view of the camera may transmit a signal. The signal may be transmitted upon request of transmitting a signal. The request of transmitting a signal may be transmitted by at least one of the camera, the server, and the control unit. By detecting 270, by the camera, a second camera in the field of view of the camera may hence meant that the camera may be arranged to receive the signal transmitted from the second camera. Wherein the signal transmitted from the second camera may comprise at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

The method may further comprise verifying 280 the change in optical output using the camera.

In the step of verifying 280 the change in optical output using the camera, the camera may capture an image comprising the electronic label and analyze the optical output of the electronic label. The camera may compare the optical output of the electronic label in the image to a predetermined optical output. The camera may verify if the change in optical output of the electronic label correspond to the predetermined optical output. The electronic label may change its optical output in a predetermined way verifying that the optical output of the electronic label is changed based on the received control signal. The step of verifying 280 the change in optical output using the camera may also be performed by analyzing the image captured by the camera, wherein analyzing the image may be performed by at least one of the camera, the server, and the control unit.

The method may comprise detecting 290 a display device associated with an electronic label by analyzing the image. The display device may comprise information detectable by the camera. The display device may comprise at least one of a QR-code, a text, and an optical output.

## Claims

1. A method (100) for automatically associating an electronic label in a retail environment to a product type, wherein the electronic label is arranged to present information associated with the product type, and wherein at least one product unit of the product type and the electronic label are arranged in a field of view of a camera, the method comprising:
capturing (110), by the camera, an image comprising the electronic label and the product unit;
determining (120) an identity of the electronic label;
detecting (130) the product unit in the image;
determining (140) a product type of the product unit;
associating (150) the electronic label with the product type;
transmitting (160) a control signal from the camera, the control signal comprising an identifier of the electronic label and information associated with the product type;
receiving (170), by the electronic label, the control signal;
changing (180) an optical output of the electronic label based on the control signal.

2. The method according to claim 1, wherein determining an identity of the electronic label comprises:
analyzing (190) an optical output of the electronic label in the image, the optical output being indicative of an identifier of the electronic label.

3. The method according to any one of the preceding claims, wherein detecting the product unit in the image comprises performing image recognition.

4. The method according to any one of the preceding claims, wherein the determining a product type of the product unit is based on a predetermined set of product types.

5. The method according to any one of the preceding claims, wherein the method further comprises:
determining (200) a position of the product unit in the image;
determining (210) a position of the electronic label in the image; and
wherein associating the electronic label with the product type is based on the determined positions.

6. The method according to any one of the preceding claims, wherein the method further comprises:
receiving (220), by the camera, information associated with the product type.

7. The method according to any one of the preceding claims, wherein the information associated with the product type comprises at least one of a product type, a product type name, a product type price information and a product type information.

8. The method according to any one of the preceding claims,
wherein the method further comprises:
storing (230) the association between the product type and the electronic label.

9. The method according to any one of the preceding claims,
wherein the method further comprises:
determining (240) a position of the product unit in the image;
determining (250) an area associated with the product type of the product unit based on the determined position of the product unit; and
storing (260) the area associated with the product type.

10. The method according to any one of the preceding claims,
wherein the method further comprises;
detecting (270), by the camera, a second camera in the field of view of said camera based on at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

11. The method according to any one of the preceding claims,
wherein the method further comprises:
verifying (280) the change in optical output using the camera.

12. The method according to any one of the preceding claims, wherein the method further comprises the step of
receiving (164), by a server, the control signal transmitted from the camera and
transmitting (166), by the server, the control signal.

13. The method according to any one of the preceding claims, wherein the method comprises;
detecting (290) a display device associated with an electronic label by analyzing the image.

14. A system (300) for automatically associating an electronic label (320) in a retail environment to a product type (360), wherein the system comprises;
a product unit (350) having a product type (360);
an electronic label (320) arranged to present information associated with a product type (360);
a camera (310) arranged to capture an image comprising the electronic label and the product unit; and
a control unit (370) configured to:
determine an identity of the electronic label;
detect the product unit in the image;
determine a product type of the product unit;
associating the electronic label with the product type;
cause the camera to transmit a control signal, the control signal comprising an identifier of the electronic label and information associated with the product type; and
wherein the electronic label is configured to receive the control signal, and changing its optical output based on the control signal.

15. The system according to claim 14, wherein the camera is a mobile device.

16. The system according to any one of claims 14 - 15, wherein the camera is arranged on at least one of a shelf, a ceiling and a wall.
